**Europäisches Patentamt**

**European Patent Office**

**Office européen des brevets**

(19)

(11) Veröffentlichungsnummer: **0 335 066 B1**

(12) **EUROPÄISCHE PATENTSCHRIFT**

(45) Veröffentlichungstag der Patentschrift:
27.12.91 Patentblatt 91/52

(51) Int. Cl.⁵: **C02F 1/00**, C02F 1/28,
B01J 47/02, B01D 24/00

(21) Anmeldenummer: 89100689.2

(22) Anmeldetag: 17.01.89

(54) **Wasserreinigungsvorrichtung mit einem Einlauftrichter.**

(30) Priorität: 26.03.88 DE 3810441

(43) Veröffentlichungstag der Anmeldung:
04.10.89 Patentblatt 89/40

(45) Bekanntmachung des Hinweises auf die
Patenterteilung:
27.12.91 Patentblatt 91/52

(84) Benannte Vertragsstaaten:
AT BE CH DE ES FR GB GR IT LI NL SE

(56) Entgegenhaltungen:
EP-A- 0 019 794
EP-A- 0 219 004
FR-A- 2 091 499
US-A- 2 224 577

(73) Patentinhaber: Brita Wasser-Filter-Systeme
GmbH
Waldstrasse 4
W-6204 Taunusstein 4 (DE)

(72) Erfinder: Hankammer, Heinz
Baumgartenstrasse 51
W-6204 Taunusstein 4 (DE)

(74) Vertreter: Weber, Dieter, Dr. et al
Dr. Dieter Weber und Dipl.-Phys. Klaus Seiffert
Patentanwälte Gustav-Freytag-Strasse 25
Postfach 6145
W-6200 Wiesbaden 1 (DE)

## Beschreibung

Die Erfindung betrifft eine Wasserreinigungsvorrichtung mit einem Einlauftrichter, einer mit diesem dichtend verbundenen Hülse und mit einem Einsatz, der etwa zylindermantelförmige Seitenwandungen, einen Siebdeckel und einen Siebboden aufweist und in welchem ein granulatartiges Reinigungsmittel einfüllbar ist.

Vorrichtungen der vorstehend genannten Art sind bekannt. Mit ihrer Hilfe soll aus dem Einlauftrichter, der mit Wasser gefüllt sein kann, dieses zu reinigende Wasser durch ein Reinigungsmittel, z.B. Ionenaustauscher, Aktivkohle oder dergleichen, durch den Einsatz laufen und gereinigt in einem Auffangbehälter gesammelt werden. Es kommt auf die Reinigungswirkung an, die das durch den Einsatz strömende Wasser in dem Reinigungsmittel erfährt. Daher sind einerseits eine gute Durchströmung des Reinigungsmittels und andererseits eine gewisse Verweilzeit erwünscht. Damit sich das Reinigungsmittel in Granulatform nicht mit dem zu reinigenden Wasser vermischt, ist der Einsatz an seiner Oberseite, welche dem weiten Teil des Trichters zugerichtet ist, und an seiner Unterseite jeweils mit einem Sieb versehen. Zunächst nimmt man an, daß die Flüssigkeit durch die Siebschlitze ohne weiteres in den Einsatz eintreten, durch das Reinigungsmittel hindurchströmen und bodenseitig durch den Siebboden wieder herauslaufen kann. Es hat sich aber gezeigt, daß die Siebe sich teilweise verstopfen können mit der Folge, daß der Wasserdurchlauf erheblich verlangsamt oder gestört wird. Es sind bereits verschiedene Maßnahmen zur Vermeidung der Verstopfung der deckelseitigen Siebschlitze getroffen worden. Man hat auch bodenseitig erreicht, daß eine Verstopfung der Siebschlitze durch feine Granulatteilchen im wesentlichen ausgeschlossen werden kann. Es ist aber nicht zu verhindern, daß durch die Reinigung des Wassers innerhalb des Einsatzes durch gewisse chemische Reaktionen Gase entstehen, die aus dem Einsatz nach oben außen strömen wollen bzw. von dem durchlaufenden Wasserstrom zum Siebboden mitgeführt werden und dort entweichen müssen. Auch andere kleine Luftquellen oberhalb und innerhalb des Einsatzes haben bisweilen zu dem Ergebnis geführt, daß sich unter dem Siebboden eine kleine Luft- und/oder Gasblase bildet, die sich periodisch von der Hülse unten löst und nach oben steigt, vor dem Ablösen aber den Durchfluß des zu reinigenden Wassers behindert.

Zwar hat man bereits einen Einsatz für eine solche Wasserreinigungsvorrichtung geschaffen, der einen im allgemeinen zylindrischen Becher, welcher das Filtermaterial enthält, und ein auf diesen Becher deckelartig aufsetzbares Verschlußsieb aufweist. Wenn der Boden dieses Bechers ebenfalls als Sieb ausgebildet wurde, blieb das Problem der sich bildenden Luftblase am unteren Ende der Hülse erhalten. Wurde ein innen angeordnetes zylindrisches Rohr aber freigehalten, so daß das letzte Sieb im oberen Bereich angeordnet war, dann ging Raum für die Unterbringung des Reinigungsmittels verloren. Das Problem der Luftabführung vom unteren Bereich des Einsatzes und der Hülse war daher noch nicht zufriedenstellend gelöst. Gemäß EP-A-0219004 sind die oberen und unteren Endwände gegenüber der Horizontalen geneigt und enthalten eine Vielzahl enger Schlitze. Dadurch wird erreicht, daß Luftblasen längs der Schlitze zu deren höheren Enden perlen.

Der Erfindung liegt daher die Aufgabe zugrunde, die Wasserreinigungsvorrichtung der eingangs beschriebenen Art so zu verbessern, daß etwa sich sammelnde Luft und/oder Gase den Durchfluß des zu reinigenden Wassers durch den Siebboden nicht mehr behindern.

Diese Aufgabe wird erfindungsgemäß dadurch gelöst, daß der Siebboden einen Luftsammelraum aufweist, der wenigstens teilweise zur Seitenwandung hin hochgezogen ist. Es ist eingesehen worden, daß die sich am unteren bzw. äußeren Ende des Einsatzes und damit auch der Hülse des Einlauftrichters sammelnde Luft nicht vermeidbar und auch nicht innerhalb des Einsatzes ohne weiteres abführbar ist. Deshalb wurde ein Luftsammelraum im Bereich des Siebbodens geschaffen, wo sich die entstehende Luft bzw. die Gase sammeln können, ohne daß sie dem Funktionsverlauf der Wasserreinigungsvorrichtung hindernd im Wege stehen. Um den Wasserdurchfluß zügig aufrechtzuerhalten, ist es besonders günstig, wenn der Luftsammelraum zur Seitenwandung hin hochgezogen ist. Es genügt, wenn nur ein z.B. schlauchartiger Teil vom Siebbodenbereich radial nach außen zur Seite und dann Richtung Siebdeckel hochgezogen wird. Es ist verständlich, daß Luft nach oben zu entweichen versucht, so daß gerade durch den hochgezogenen Luftsammelraum die sich bildende Luft und-/oder Gase aufgefangen bzw. aus dem Bereich des Siebbodens, wo diese Luft unerwünscht wäre, abgezogen wird. Damit können die Sieböffnungen des Bodens frei von unerwünschter Luft bzw. einem Gasgemisch gehalten werden, und der Wasserdurchlauf bleibt ungestört.

Zweckmäßig ist die Erfindung weiter dadurch ausgestaltet, daß der Luftsammelraum eine Teilfläche des Siebbodens einnimmt und zum Inneren des Einsatzes hin geschlossen ist. Im Gegensatz zu den Öffnungen des Siebbodens ist also der Luftsammelraum zur Seite des Einsatzes hin geschlossen. Man kann sich ein System von Tunneln vorstellen, die nach unten offen sind, denn hier geht es frei nach außen, während sie nach oben geschlossen sind und keine Sieböffnungen aufweisen. Das etwa durch die daneben angeordneten Sieböffnungen hindurchgedrückte Gas kann dann in diese tunnelartigen Volumen gleiten und dort gesammelt bzw. in den hochgezogenen Bereich geführt werden, welcher vorzugsweise mit den einzelnen Tunneln verbunden sein sollte.

Eine bevorzugte Ausführungsform der Erfindung ist deshalb dadurch gekennzeichnet, daß der Luftsammelraum die Gestalt von nach unterhalb und/oder außerhalb des Siebbodens offenen Halbrohren hat, die miteinander und mit einem etwa kaminförmigen, sich über wegnistens einen Teil der Seitenwandung erstreckenden weiteren Halbrohr verbunden sind. Dieses kaminförmige weitere Halbrohr ist derjenige Teil des Luftsammelraumes, welcher sich zur Seitenwandung hochzieht. Er ist im Bereich des Siebbodens größer und verengt sich zum oberen Raum des Einsatzes hin, d.h. in Richtung seines Deckels, weshalb dieses Halbrohr kaminförmig genannt wird. Auch dieses Rohr ist im Querschnitt halb abgeschnitten, so daß dieser seitlich hochgezogene Teil des Luftsammelraumes ebenfalls nach außen zur Seite hin offen ist. Ein Luftsammelraum entsteht ersichtlich durch das Einsetzen dieses sogenannten Einsatzes, den man auch mit Filterpatrone bezeichnen kann, in die Hülse des Einlauftrichters. Die Hülsenwandungen umschließen wenigstens im seitlichen Bereich den Einsatz, so daß die unten im Bereich des Siebbodens entstehende Luft tatsächlich im kaminförmigen Halbrohr des Luftsammelraumes gesammelt werden kann. Nach unten muß die Hülse offen sein, denn das aus dem Siebboden des Einsatzes austretende Wasser muß auch nach unten und außen herausfließen können.

Zweckmäßig ist es erfindungsgemäß dabei, wenn die im Bereich des Siebbodens befindlichen, nach außen offenen Halbrohre des Luftsammelraumes sternförmig und vorzugsweise radial von der Außenkante des Siebbodens zu dessen Mitte hin verlaufen. Man kann sich das Tunnelsystem als sternförmig angeordnete nach außen offene Halbrohre des Luftsammelraumes vorstellen, so daß an jeder Stelle des Siebbodens aus seinen Öffnungen herausgedrückte Luft in ein benachbartes Halbrohr gleiten und nach oben in das kaminförmige Halbrohr des Luftsammelraumes geführt werden kann. Der Siebboden kann zwar in verschiedener Weise gebildet sein, ein Sieb hat im allgemeinen aber die Öffnungen umgebende Stege, die bei radialer Ausgestaltung damit zugleich wenigstens einen Teil der nach außen offenen Halbrohre des Luftsammelraumes bilden können. Man erkennt die vorteilhafte dichte Nachbarschaft dieser Halbrohre des Luftsammelraumes zu den Öffnungen des Siebbodens, so daß entstehende Gase oder durch die Öffnungen gedrückte Luft im ganzen Bereich des Siebbodens sogleich in die Halbrohre abgeführt und im Sammelraum gesammelt werden kann.

Es wird durch die Halbrohre des Luftsammelraumes nur ein unwesentlicher Teil des Volumens des Einsatzes für die Aufnahme des Reinigungsmittels genommen. Damit nun die Verbesserung der Funktion der neuen Wasserreinigungsvorrichtung noch vorteilhafter gelingt und eine etwa befürchtete Volumenverkleinerung durch die verschiedenen Halbrohre des Luftsammelraumes ausgeglichen wird, ist erfindungsgemäß ferner vorgesehen, daß der Siebboden mindestens einen sich etwa senkrecht aus seiner Fläche herausstehenden Siebansatz aufweist. Wie der Name sagt, soll dieser Ansatz am Siebboden angesetzt sein und sich vorzugsweise nach unten/außen erstrecken. Dabei ist es besonders vorteilhaft, wenn die Öffnungen im Bereich dieses Ansatzes die Gestalt kurzer Schlitze haben, die im wesentlichen parallel zueinander kranzartig in der Fläche des Ansatzes angeordnet sind. Die Fläche des Ansatzes ist vorzugsweise die eines Kegelstumpfes, wobei sich das verjüngende Ende unten befindet. Die untere Fläche, welche den Kegelstumpf nach unten außen abschließt, kann geschlossen oder ebenfalls mit Sieböffnungen versehen sein. Durch eine derartige Ausgestaltung der Fläche des Siebansatzes kann mit dem Wasser ausgedrückte Luft zur Seite aus den Schlitzen des Siebansatzes austreten und sogleich außerhalb der Hülse nach oben weggeführt werden. Auch dadurch wird die im Bereich des Siebbodens und vorzugsweise unter diesem gebildete Luftblase verringert. Der kegelstumpfförmige Siebansatz steht mit dem Innenraum des Einsatzes direkt in Verbindung, so daß er mit Reinigungsmittel gefüllt werden kann. Damit wird ersichtlich das Aufnahmevolumen des Einsatzes vergrößert. Außerdem wird die austretende Luft nur teilweise in den Luftsammelraum geführt, weil in der eben beschriebenen Weise ein gewisser Anteil der sonst nach unten geführten Luft zur Seite heraus und an der Hülse vorbei nach oben entweicht.

Es versteht sich, daß der Siebansatz so ausgestaltet ist, daß er aus der Hülse des Einlauftrichters nach unten heraussteht, so daß ein herkömmlicher Einsatz, wie er derzeit im Handel zu kaufen ist, ebenso in die Hülse des Einlauftrichters eingesetzt werden kann wie der neue Einsatz mit oder ohne Siebansatz. Auch der Luftsammelraum nimmt kein zusätzliches Volumen derart ein, daß etwa der neue Einsatz in der herkömmlichen Hülse nicht mehr untergebracht werden könnte. Dadurch ist eine vorteilhafte Austauschbarkeit des alten Einsatzes durch den neuen gewährleistet. Der Endverbraucher kann jederzeit neue Einsatztypen kaufen und dennoch seinen alten Einlauftrichter mit Hülse verwenden.

Zweckmäßig ist es gemäß der Erfindung ferner, wenn der Luftsammelraum neben dem wenigstens einen Siebansatz angeordnet und dichtend mit diesem verbunden ist. Dadurch wird die Funktion des Luftsammelraumes nicht beeinträchtigt, und die Funktion der Reinigungsvorrichtung wird erhöht, denn das abdichtende Verbinden des Siebansatzes mit dem Siebboden garantiert eine Führung des Wassers auch in das Reinigungsmittel innerhalb des Siebansatzes, so daß die Betthöhe an Reinigungsmittel erhöht wird.

Vorteilhaft ist es gemäß der Erfindung ferner, wenn die am Einlauftrichter angebrachte Hülse bodenseitig mit einem Anspritzkreuz versehen ist, durch dessen vier Öffnungen vier Siebansätze des Einsatzes nach unten und/oder außen hindurchragend derart gehaltert sind, daß sich der Luftsammelraum über dem Bereich des Anspritzkreuzes befindet.

Die Unterseite der Hülse kann man zwar durch einen radialen Innenflansch zur Halterung des Einsatzes ausgestalten. Aus Gründen der Herstellungstechnik, der Festigkeit und auch einfacheren Benutzung ist es aber zweckmäßig, ein Anspritzkreuz am unteren Ende der Hülse vorzusehen, durch welches zwischen den radial verlaufenden Kreuzstegen Öffnungen entstehen. Die Siebansätze können sich nun durch diese Öffnungen erstrecken. Vorzugsweise, bei einem echten Kreuz mit vier Stegen, entstehen vier Öffnungen, so daß der Einsatz unten vier Siebansätze tragen sollte, die genau in die Öffnungen des Anspritzkreuzes passen. Auf diese Weise kann beispielsweise der gesamte Siebboden so umgestaltet sein, daß die Sieböffnungen sich nur noch in den Siebansätzen befinden, die alle eine etwa kegelstumpfförmige Gestalt haben können. Es verbleibt von dem Siebboden dann nur noch der Bereich innerhalb der vier Siebansätze, der ähnlich einem Kreuz geformt ist, so daß man die entlang diesem Kreuz verlaufenden Halbrohre des Luftsammelraumes zugleich auch über die Stege des Anspritzkreuzes anordnen kann, um den zur Verfügung stehenden Raum optimal zu nutzen. Dabei versteht es sich, daß die unteren Kanten der Halbrohrschalen des Luftsammelraumes in einem Abstand vom Anspritzkreuz der Hülse liegen sollen, damit die aus den Siebansätzen seitlich austretende Luft, die nicht die Gelegenheit hatte, sogleich außerhalb der Hülse nach oben zu entweichen, in den Luftsammelraum auch eintreten kann.

Bei zweckmäßiger weiterer Ausgestaltung der Erfindung ersteckt sich der Luftsammelraum im Bereich des kaminförmigen Halbrohres bis in das obere Viertel der Seitenwandung des Einsatzes, und die Hülse weist im Bereich seines (des Halbrohres) oberen Endes eine Öffnung für den Austritt der gesammelten Luft bzw. des Gases auf. Zwar bedingt die Öffnung in der Hülse den Ankauf einer neuen Wasserreinigungsvorrichtung mit Einlauftrichter und Hülse, die neue Vorrichtung hat aber den erheblichen Vorteil, daß der Luftsammelraum sehr klein ausgestaltet werden kann und dennoch alle im Bereich des Siebbodens austretende Luft über die Halbrohre gesammelt, in das kaminförmige senkrechte Halbrohr geführt und durch dieses oben durch die Öffnung in der Hülse abgeführt werden kann.

Günstig ist es gemäß der Erfindung auch, wenn auf der Innenseite der etwa zylindermantelförmigen Hülse eine vorzugsweise keilförmige Führungsfeder angebracht ist. Bei der bisherigen Beschreibung wurde davon ausgegangen, daß die Hülse sowohl außenseitig als auch innenseitig etwa zylindermantelförmig ist, wobei die Hülse unten bei der oben beschriebenen bevorzugten Ausführungsform mit einem Anspritzkreuz versehen ist. Durch die vorstehende Führungsfeder steht nun auf der Innenseite der Hülse eine Art Rippe radial nach innen. Diese Rippe entspricht der Gestalt des kaminförmigen Halbrohres an der Seitenwandung des Einsatzes derart, daß der Einsatz mit seinem Luftsammelraum und dem seitlichen, senkrechten Halbrohr zwar vollständig in die neue Hülse mit der Führungsfeder einsetzbar ist, jedoch nur in einer bestimmten Drehposition. Wenn der Endverbraucher den Einsatz in einer falschen Drehwinkelposition nach unten in die Hülse schiebt, setzt der Einsatz auf, denn seine zylindermantelförmige Außenwandung stößt auf die radial äußere, obere Kante der Führungsfeder. Der Einsatz kann dann nicht vollständig in die Hülse eingesetzt werden, insbesondere im Falle angebrachter Siebansätze ragen diese nicht durch das Anspritzkreuz hindurch. Im Gegenteil, die erfindungsgemäße Führungsfeder sorgt für die richtige Drehposition des Einsatzes beim Einfügen in die Hülse, so daß insbesondere im Falle der Siebansätze diese genau in die Öffnungen zwischen den Stegen des Anspritzkreuzes passen. Auf diese Weise ist das Einsetzen der Filterpatrone (des Einsatzes) erleichtert und geführt. Da also das kaminförmige Halbrohr des Luftsammelraumes diese keilförmige Führungsfeder aufnehmen und mit dieser in Eingriff kommen soll, wird die Gestalt der keilförmigen Führungsfeder der Form des kaminförmigen Halbrohres des Luftraumes angepaßt sein. Wenn gemäß der vorstehenden Ausführungsform die im Siebbodenbereich befindlichen Halbrohre des Luftsammelraumes über den Stegen des Anspritzkreuzes liegen, dann wird auch die keilförmige Führungsfeder an der Hülse in der Verlängerung eines solchen Steges des Anspritzkreuzes liegen. Die keilförmige Führungsfeder erstreckt sich außerdem vorzugsweise vom Boden der Hülse bis unter die Öffnung, sofern die spezielle Ausführungsform sowohl die keilförmige Führungsfeder als auch die Öffnung hat. Damit der eine Einsatz mit dem anderen und die eine Hülse mit der anderen austauschbar sind, wird aber auch im Falle ohne Öffnung in der Hülse die keilförmige Führungsfeder nur bis an die Stelle nach oben reichen, die nach außerhalb der Position liegt, in welcher die Öffnung vorgesehen sein könnte.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figur 1  die Seitenansicht des Einsatzes ohne Einlauftrichter und ohne Hülse, wobei in Richtung des kaminförmigen, seitlichen, senkrechten Halbrohres geblickt wird,

Figur 2  eine Ansicht auf den Einsatz von der Seite des Siebbodens her, d.h. in Figur 3 von unten nach oben,

Figur 3  eine teilweise abgebrochene Darstellung des Einsatzes, wobei ein Teil der Seitenwandung und ein Teil des seitlichen, senkrechten Halbrohres in der Kaminform geschnitten dargestellt ist und

Figur 4 eine ähnliche Ansicht des Einsatzes wie in Figur 3, wobei jedoch zusätzlich die Hülse mit Führungsfeder, darüber angeordnetem Einlauftrichter und abgebrochen der Auffangbehälter dargestellt sind.

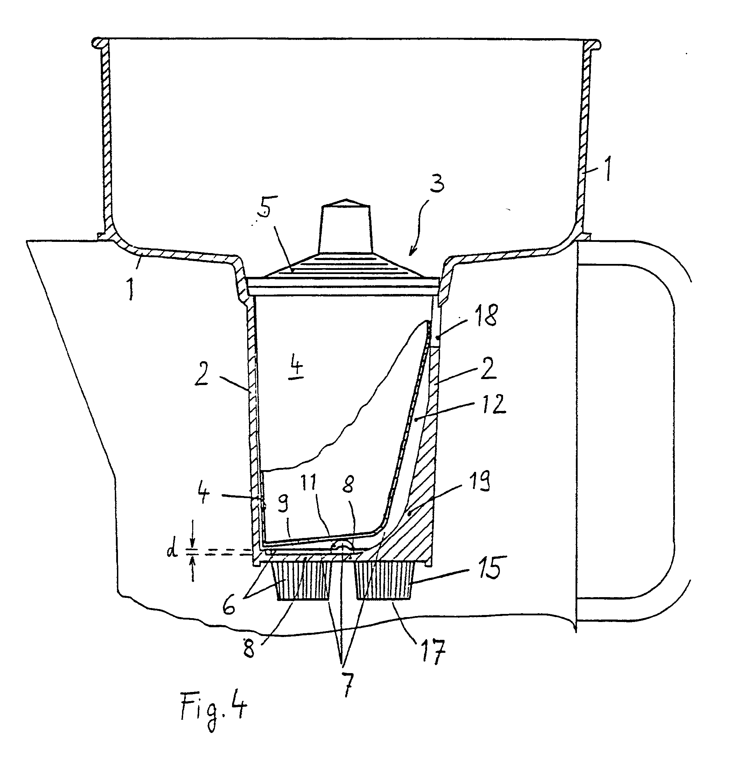

Da der Sammelbehälter unwesentlich ist und gegebenenfalls auch andere Gestalt haben kann, ist er in Figur 4 nur abgeschnitten und mit dünnen Linien ohne Bezugszahl dargestellt.

Die Wasserreinigungsvorrichtung selbst erkennt man in ihren wesentlichen Teilen aus Figur 4. Sie besteht nämlich aus dem Einlauftrichter 1, der mit diesem dichtend verbundenen Hülse 2 und dem allgemein mit 3 bezeichneten Einsatz.

Der Einsatz seinerseits hat etwa zylindermantelförmige Seitenwandungen 4, einen Siebdeckel 5 und einen Siebboden 6. Das Reinigungsmittel ist nicht dargestellt aber ohne weiteres im Raum der Seitenwandungen 4 vorstellbar.

Die besondere Ausgestaltung des Siebbodens 6 hat einen Luftsammelraum 7. Dieser besteht aus Einzelteilen, die zusätzlich zu der Bezugszahl 7 mit anderen Bezugszahlen wie folgt gekennzeichnet sind.

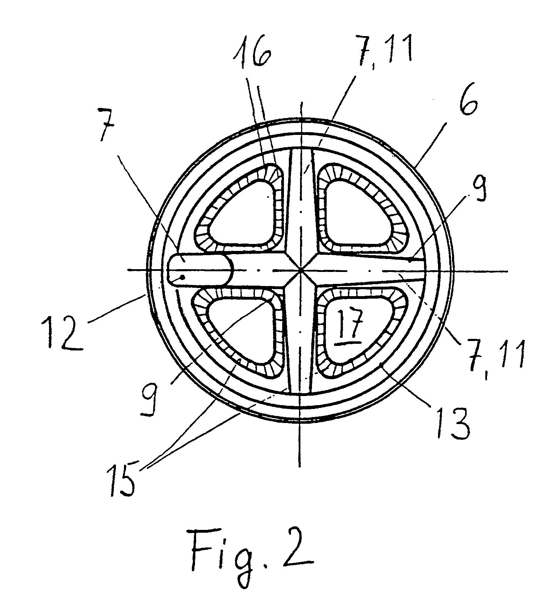

Entsprechend dem Anspritzkreuz 8 der in Figur 4 gezeigten Hülse 2 liegen im Abstand d über der Oberseite der Stege des Anspritzkreuzes 8 die Unterkanten 9 des Luftsammelraumes 7 in Kreuzform, wie in Figur 2 dargestellt ist.

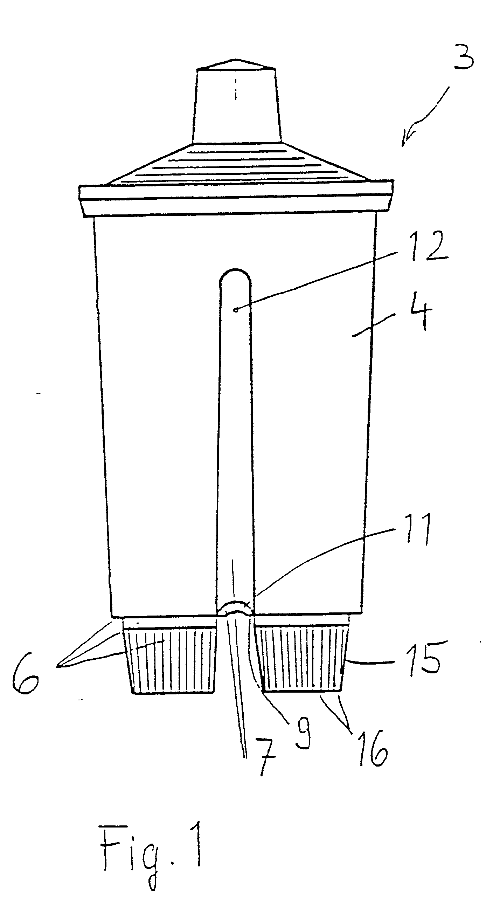

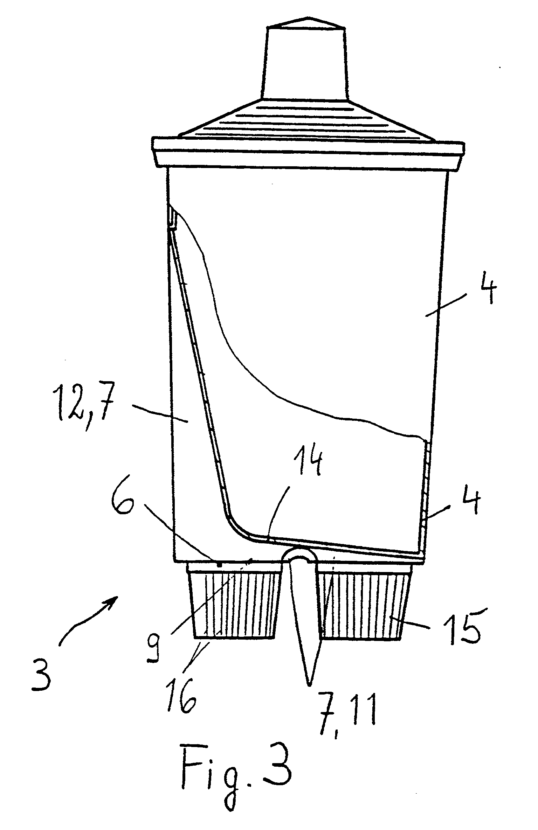

Man sollte Figur 2 in Verbindung mit Figur 3 betrachten, denn außer den nach unterhalb und/oder außerhalb des Siebbodens 6 offenen Halbrohren 11 besteht der insgesamt mit 7 bezeichnete Luftsammelraum auch aus dem senkrechten, seitlichen, kaminförmig sich nach oben erstreckenden Halbrohr 12, das in den Figuren 2 und 3 auf der linken Seite steht, auf das man in Figur 1 von außen blickt, und welches bei der Darstellung der Figur 4 rechts angeordnet ist.

Die kreuzförmig wie ein Tunnelsystem angeordneten Halbrohre 11 des Luftsammelraumes 7 erstrecken sich von der kreisförmigen Außenkante 13 des Siebbodens 6 bis zu seiner Mitte, wobei die Unterkanten 9 dieser Halbrohre 11 zur Mitte hin unter Erweiterung der Rohre 11 divergieren. Durch die Vergrößerung der Halbrohre 11 von außen nach innen gewinnen sie auch an Höhe (oder Tiefe, je nachdem wie man das Bild betrachtet), so daß in der seitlichen Schnittdarstellung der Figuren 3 und 4 die das offene Halbrohr 11 nach oben zum Inneren des Einsatzes 3 hin gelegenen Wandungen von außen zur Mitte hin ansteigen. Nur eines der vier Halbrohre macht dabei eine Ausnahme, nämlich derjenige Durchmessersteg, der auch das seitliche, senkrechte Halbrohr 12 enthält. Aus diesem Grunde verlaufen die ohne Sieböffnungen versehenen Oberwände 14 des Halbrohres 11 bei der Darstellung der Figuren 3 und 4 von der Mitte nach außen weiter hoch, münden dann aber in das seitliche, kaminartige Halbrohr 12.

Durch dieses System von Halbrohren, in Figur 2 in Kreuzform angeordnet, wird ein nach unten offener und nach oben geschlossener Luftsammelraum 7 gebildet, dessen Halbrohre 11 über das Zentrum miteinander und gemäß Darstellung der Figuren 2 und 3 links mit dem weiteren, seitlichen Halbrohr 12 verbunden sind.

Durch das nur in Figur 4 gezeigte Anspritzkreuz 8 der Hülse 2, welches aber im Bereich der ersten Halbrohre 11 gemäß Figur 2 liegt, sind vier (nicht gezeigte) Öffnungen geschaffen, durch welche sich vier Siebansätze 15 erstrecken. Sie sind etwa kegelstumpfförmig ausgebildet, wenngleich man aus Figur 2 in der Draufsicht auf den Siebboden 6 von unten erkennt, daß ihr Querschnitt im wesentlichen dreieckförmig ist. Dies ergibt sich aus der Form der Öffnungen zwischen dem Anspritzkreuz 8, die auch im wesentlichen dreieckförmig sind. Zur optimalen Raumausnutzung sind die Siebansätze 15 so ausgestaltet, daß sie diese Öffnungen weitgehend ausfüllen. Die Öffnungen der Siebansätze 15 sind als Schlitze 16 ausgebildet, und die ebenen Unterflächen 17 der Siebansätze 15 sind geschlossen. Die die Öffnungen des Siebbodens 6 bildenden Schlitze 16 sind also die einzigen Öffnungen des Siebbodens.

Im Betrieb kann daher die unten aus den Schlitzen 16 ausgedrückte Luft entweder seitlich an den Außenwandungen der Hülse 2 hochsteigen, oder sie gelangt über die offene Hälfte in die Halbrohre 11 des Luftsammelraumes 7, wo sie infolge des Höhenverlaufes der oberen, geschlossenen Wandungen 14 der Halbrohre 11 direkt in das seitliche, senkrechte Halbrohr 12 in Kaminform geführt und dort hochgeleitet wird.

Aus der Darstellung der Figur 4 erkennt man ferner eine Öffnung 18 oben in einer Seitenwand der Hülse 2 an einer Stelle, wo das kaminförmige Halbrohr 12 oben in Richtung zum Deckel 5 hin endet derart, daß hochsteigende Luft das Halbrohr 12 nach oben durchströmt und durch die Öffnung 18 in den Auffangbehälter entweicht.

In Figur 4 erkennt man schließlich auch die geschnitten dargestellte keilförmige Führungsfeder 19, die genau in das Halbrohr 12 des Einsatzes 3 paßt, mit diesem Halbrohr in Eingriff tritt und dennoch ausreichend Platz läßt, daß im Halbrohr 12 des Luftraumes 7 nach oben strömende Luft an dieser keilförmigen Führungsfeder 19 vorbeiströmen kann.

Füllt man in den Einlaßtrichter 1 gemäß Figur 4 Wasser oben ein, so dringt dieses ersichtlich durch die schematisch angedeuteten Schlitze des Deckels 5 in den Einsatz 3 ein und verläßt diesen durch die Siebansätze 15 über die Schlitze 16, um gereinigt in dem Auffangbehälter der Figur 4 gesammelt zu werden. Die dabei mitgenommene Luft, die im Bereich des Siebbodens 6 aus den Schlitzen 16 austritt, gelangt in den Luftsammelraum 7 und entweicht über das seitliche Halbrohr 12 und die Öffnung 18 nach oben. Die Funktion und Wasserreinigung der neuen Vorrichtung ist dadurch erheblich verbessert.

**Patentansprüche**

1. Wasserreinigungsvorrichtung mit einem Einlauftrichter (1), einer mit diesem dichtend verbundenen Hülse (2) und mit einem Einsatz (3), der etwa zylindermantelförmige Seitenwandungen (4), einen Siebdeckel (5) und einen Siebboden (6) aufweist und in welchem ein granulatartiges Reinigungsmittel einführbar ist, **dadurch gekennzeichnet,** daß der Siebboden (6) einen Luftsammelraum (7) aufweist, der wenigstens teilweise zur Seitenwandung (4) hin hochgezogen ist.

2. Vorrichtung nach Anspruch 1, dadurch gekennzeichnet, daß der Luftsammelraum (7) eine Teilfläche des Siebbodens (6) einnimmt und zum Inneren des Einsatzes (3) hin geschlossen ist.

3. Vorrichtung nach Anspruch 1 oder 2, dadurch gekennzeichnet, daß der Luftsammelraum (7) die Gestalt von nach unterhalb und/oder außerhalb des Siebbodens (6) offenen Halbrohren (11) hat, die miteinander und mit einem etwa kaminförmigen, sich über wenigstens einen Teil der Seitenwandungen (4) erstreckenden weiteren Halbrohr (12) verbunden sind.

4. Vorrichtung nach einem der Ansprüche 1 bis 3, dadurch gekennzeichnet, daß die im Bereich des Siebbodens (6) befindlichen, nach außen offenen Halbrohre (11) des Luftsammelraumes (7) sternförmig und vorzugsweise radial von der Außenkante (13) des Siebbodens (6) zu dessen Mitte hin verlaufen.

5. Vorrichtung nach einem der Ansprüche 1 bis 4, dadurch gekennzeichnet, daß der Siebboden (6) mindestens einen sich etwa senkrecht aus seiner Fläche herauserstreckenden Siebansatz (15) aufweist.

6. Vorrichtung nach einem der Ansprüche 1 bis 5, dadurch gekennzeichnet, daß der Luftsammelraum (7) neben dem wenigstens einen Siebansatz (15) angeordnet und dichtend mit diesem verbunden ist.

7. Vorrichtung nach einem der Ansprüche 1 bis 6, dadurch gekennzeichnet, daß die am Einlauftrichter (1) angebrachte Hülse (2) bodenseitig mit einem Anspritzkreuz (8) versehen ist, durch dessen vier Öffnungen vier Siebansätze (15) des Einsatzes (3) nach unten und/oder außen hindurchragend derart gehalten sind, daß sich der Luftsammelraum (7) über dem Bereich des Anspritzkreuzes (8) befindet.

8. Vorrichtung nach einem der Ansprüche 1 bis 7, dadurch gekennzeichnet, daß sich der Luftsammelraum (7) im Bereich des kaminförmigen Halbrohres (12) bis in das obere Viertel der Seitenwandung (4) des Einsatzes (3) erstreckt und daß die Hülse (2) im Bereich seines (Halbrohres 12) oberen Endes eine Öffnung (18) für den Austritt der gesammelten Luft bzw. des Gases aufweist (Figur 4).

9. Vorrichtung nach einem der Ansprüche 1 bis 8, dadurch gekennzeichnet, daß auf der Innenseite der etwa zylindermantelförmigen Hülse (2) eine vorzugsweise keilförmige Führungsfeder (19) angebracht ist (Figur 4).

**Claims**

1. A water purification apparatus having an intake funnel (1), a casing (2) which is sealingly connected thereto, and having an insert (3) which has approximately cylindrical casing-like side walls (4), a sieve cover (5) and a sieve bottom (6), and in which a granular purifying agent can be introduced, characterised in that the sieve bottom (6) has an air collecting chamber (7) which is at least partially drawn up to the side wall (4).

2. An apparatus according to Claim 1, characterised in that the air collecting chamber (7) receives a joint face of the sieve bottom (6) and is closed towards the inside of the insert (3).

3. An apparatus according to Claim 1 or Claim 2, characterised in that the air collecting chamber (7) is in the form of open semi-cylindrical tubes (11) at the bottom and/or outside the sieve bottom (6), the tubes being joined together and joined to another approximately chimney-like semi-cylindrical tube (12) which extends at least over a part of the side walls (4).

4. An apparatus according to one of Claims 1 to 3, characterised in that the outwardly open semi-cylindrical tubes (11) of the air collecting chamber (7), which tubes are disposed in the region of the sieve bottom (6), are of a star-shaped configuration and preferably extend radially from the outer edge (13) of the sieve bottom (6) to the centre thereof.

5. An apparatus according to one of Claims 1 to 4, characterised in that the sieve bottom (6) has at least one sieve attachment (15) which extends approximately vertically from the surface thereof.

6

6. An apparatus according to one of Claims 1 to 5, characterised in that the air collecting chamber (7) is arranged adjacent to the, at least one, sieve attachment (15) and is sealingly connected thereto.

7. An apparatus according to one of Claims 1 to 6, characterised in that the bottom of the casing (2) arranged on the intake funnel (1) is provided with a sprinkler cross (8), through the four openings of which four sieve attachments (15) of the insert (3) are held so that they project downwardly and/or outwardly in such a way that the air collecting chamber (7) is disposed above the region of the sprinkler cross (8).

8. An apparatus according to one of Claims 1 to 7, characterised in that the air collecting chamber (7) in the region of the chimney-like semi-cylindrical tube (12) extends into the upper quarter of the side wall (4) of the insert (3), and that the casing (2) in the region of the upper end (of the semi-cylindrical tube 12) has an opening (18) for the air or gas collected to escape (Figure 4).

9. An apparatus according to one of Claims 1 to 8, characterised in that arranged on the inner side of the approximately cylindrical casing-like casing (2) is a preferably wedge-shaped guide spring (19) (Figure 4).


**Revendications**

1. Dispositif de purification de l'eau, comportant un entonnoir de remplissage (1), un tube (2) lié d'une manière étanche à ce dernier et une cartouche de filtration (3), qui comporte des parois latérales (4) approximativement cylindriques, un couvercle perforé (5) et un fond perforé (6), et dans lequel on peut introduire un produit de purification granulaire, caractérisé en ce que le fond perforé (6) comporte un espace collecteur d'air (7), qui au moins en partie est relevé vers le haut vers la paroi latérale (4).

2. Dispositif selon la revendication 1, caractérisé en ce que l'espace collecteur d'air (7) occupe une surface partielle du fond perforé (6) et est fermé vers l'intérieur de la cartouche (3).

3. Dispositif selon la revendication 1 ou 2, caractérisé en ce que l'espace collecteur d'air (7) a la forme de demi-tubes (11), ouverts vers le bas et/ou vers l'extérieur du fond perforé (6), qui sont assemblés les uns aux autres et à un autre demi-tube (12), approximativement en forme de cheminée, qui s'étend sur au moins une partie des parois latérales (4).

4. Dispositif selon l'une des revendications 1 à 3, caractérisé en ce que les demi-tubes (11) de l'espace collecteur d'air (7), ouverts vers l'extérieur et se trouvant dans la zone du fond perforé (6) courent en étoile et de préférence radialement, du bord extérieur (13) du fond perforé (6) jusqu'à son centre.

5. Dispositif selon l'une des revendications 1 à 4, caractérisé en ce que le fond perforé (6) comporte au moins un talon de filtration (15), s'étendant vers l'extérieur approximativement perpendiculairement à sa surface.

6. Dispositif selon l'une des revendications 1 à 5, caractérisé en ce que l'espace collecteur d'air (7) est disposé à côté de l'au moins un talon de filtration (15) et est relié à ce dernier d'une manière étanche.

7. Dispositif selon l'une des revendications 1 à 6, caractérisé en ce que le tube (2) disposé contre l'entonnoir de remplissage (1) est, côté fond, pourvu d'une croix rapportée (8), à travers les quatre ouvertures de laquelle quatre talons de filtration (15) de la cartouche filtrante (3) sont maintenues, en dépassant vers le bas et/ou vers l'extérieur, de façon que l'espace collecteur d'air (7) se trouve au-dessus de la zone de la croix (8).

8. Dispositif selon l'une des revendications 1 à 7, caractérisé en ce que l'espace collecteur d'air (7) s'étend dans la zone du demi-tube (12) en forme de cheminée jusque dans le quart supérieur de la paroi latérale (4) de la cartouche (3), et que le tube (2) présente, dans la zone de son extrémité supérieure (de son demi-tube 12), une ouverture (18) destinée à la sortie du gaz ou de l'air recueillis (Figure 4).

9. Dispositif selon l'une des revendications 1 à 8, caractérisé en ce qu'un ressort de guidage (19), de préférence en forme de coin, est rapporté contre le côté intérieur du tube approximativement cylindrique (2) (Figure 4).

Fig. 1

Fig. 2

Fig. 3

Fig. 4